# EUROPÄISCHE PATENTSCHRIFT

(11) **EP 1 128 602 B1**
(45) Veröffentlichungstag und Bekanntmachung des Hinweises auf die Patenterteilung: **04.10.2006**
(21) Anmeldenummer: 00103797.7
(22) Anmeldetag: 23.02.2000
(51) Int. Cl.: H04L 12/26, H04L 29/06

(54) **Vorrichtung zum Aufbau eines Protokoll-Stacks und zugehöriges Verfahren**
Apparatus for building a protocol stack and corresponding method
Appareil pour la construction d'une pile de protocoles et méthode correspondante

(43) Veröffentlichungstag der Anmeldung: 29.08.2001
(73) Patentinhaber: Tektronix Berlin GmbH & Co. KG, 13629 Berlin (DE)
(72) Erfinder: Lenz, Dirk-Holger, D-14656 Brieselang (DE); Kittan, Jens, D-16737 Schwante (DE)
(74) Vertreter: Schurack, Eduard F.

(56) Entgegenhaltungen:
- EP-A- 0 788 267
- WO-A-97/35406

## Beschreibung

Die vorliegende Erfindung betrifft eine Vorrichtung zum Aufbau eines Protokoll-Stacks, ein zugehöriges Verfahren sowie einen Protokolltester mit einer derartigen Vorrichtung.

Das Gebiet der Protokollmeßtechnik ist in einem besonderen Maße innovativ. Nach jeder Weiter- und Neuentwicklung von Telekommunikations- und Netzwerkprotokollen stehen die Hersteller und Betreiber von Telekommunikations- und Netzwerkgeräten vor dem Problem der Funktions- und Conformancekontrolle der neuen Anlagen. Aufgrund des Wettbewerbs ist jeder Hersteller bemüht, sein Produkt so früh wie möglich auf den Markt zu bringen. Durch das hohe Tempo dieser Entwicklung werden Hersteller von Protokolltestsystemen in einem besonderen Maße gefordert.

Um die Testzeiten für ihre Anlagen so kurz wie möglich zu halten und das Testpersonal mit wenig Protokollwissen zu belasten, setzen Hersteller häufig Protokollemulationen auf den Protokolltestsystemen ein. In der Praxis werden Emulationen eines Protokolls häufig so erstellt, daß die Emulationen jeweils einzelne Protokollschichten nachbilden. Durch das Verbinden der einzelnen Protokollschichten zu einem emulierenden System können auf diese Art ganze Protokoll-Stacks oder auch ausgewählte Teile eines Protokoll-Stacks nachgebildet werden. Die einzelnen Protokollschichten werden abstrakt betrachtet und leiten so Daten von Schicht zu Schicht weiter. In den Spezifikationen von Protokollen werden hierbei in der Regel sogenannte Primitiven verwendet, um die Kommunikation zwischen den Protokollschichten zu beschreiben. Die Erstellung solcher Protokollemulationen stellt einen erheblichen Arbeitsaufwand dar.

In vielen Fällen bestehen neue Protokoll-Stacks vollständig oder zumindest fast vollständig aus bereits bekannten Protokollschichten. Aber auch in diesen Fällen muß für das Protokolltestsystem eine neue Applikation zusammengestellt werden. An dieser Stelle wird eine große Flexibilität an ein möglichst einfaches Vorgehen für die Modifikation von Protokoll-Stacks gewünscht.

Im Stand der Technik ist es bei Protokollsystemen, die die Fähigkeit besitzen zu simulieren und dazu Protokollemulationen einsetzen, bisher üblich, statische Applikationen anzubieten, d.h. daß der Anwender fertige Applikationen aufrufen und nutzen kann. In diesem Zusammenhang wird verwiesen auf das ISO OSI Referenzmodell, das durch diese Bezugnahme in den Offenbarungsgehalt der vorliegenden Anmeldung aufgenommen wird. In diesem Fall ist es dem Benutzer nicht möglich selbstständig den Protokoll-Stack durch Zufügen, Ersetzen oder Entfernen von Protokollschichten zu modifizieren. Das Herstellen einer neuen Applikation, d.h. das Zusammensetzen vorhandener Emulationen von Protokollschichten erfordert spezielles Systemwissen sowie Kenntnisse über die verwendeten Kommunikationsmechanismen und kann meist nur vom Hersteller vorgenommen werden. Für den Protokolltester entsteht daraus das Problem, daß er nur eine endliche Anzahl von Applikationen mit jeweils vorgegebener Konstellation von Protokollemulationen vorfindet.

Andere Lösungen wie z.B. Stream-Konzepte haben sich bei Protokolltestsystemen nicht durchgesetzt. Stream-Konzepte können nur dann eingesetzt werden, wenn eine exakte Schichtung mit einer Protokollschicht auf einer anderen vorliegt. Sobald mehrere Protokolle auf der gleichen Ebene vorliegen, Querbeziehungen zwischen Ebenen notwendig sind oder Beziehungen über zwei Ebenen hinausgehen, ist diese Technik nicht mehr anwendbar.

Aus der WO97/35406 A ist ein Protokollsimulator bekannt, welcher OSI-Schichten simuliert und die OSI-Schichten dazu verwendet, ausgewählte Zielsysteme zu prüfen. Die OSI-Schichten werden mit Hilfe von Protokollsimulationssoftwareblöcken simuliert, und ihnen sind unterschiedliche Kommunikationsprotokolle zugeordnet, die jeweils einem C-System entsprechen. Ein Protokollsimulationsanpasser wählt den Protokollsimulationssoftwareblock, der zu dem ausgewählten Zielsystem gehört, aus. Die OSI-Schichten aus dem ausgewählten Protokollsimulationssoftwareblock werden dann in einem Protokollstapel zusammengefasst, und es werden Prüfbotschaften unter Verwendung des Protokollstapels erzeugt.

Aus der EP 0788267 A2 sind ein Verfahren und ein Gerät zum Erzeugen von Testpaketen bekannt, die bei der Entwicklung von Netzwerk-Protokollvorrichtungen verwendet werden. Es wird hierbei ein erstes Computersystem bereitgestellt, das eine Paketgenerationsfunktionalität aufweist. Die Paketgenerationsfunktionalität umfasst einen generischen Steuersprachenschnittstellenmechanismus und einen Paketverwaltungsgenerator. Unter Verwendung der Funktionalität werden Testpakete zur Verwendung bei der Prüfung von verschiedenen Aspekten von Netzwerkprotokollvorrichtungen erzeugt.

Der vorliegenden Erfindung liegt deshalb die Aufgabe zugrunde, eine Vorrichtung der eingangs genannten Art zur Verfügung zu stellen, die dem Testanwender die Möglichkeit gibt, bestehende Emulationen von Protokoll-Schichten in einer flexiblen und einfachen Art und Weise zu einem Protokoll-Stack zusammenzusetzen. Der Testanwender soll hierbei mit möglichst wenig Vorwissen auskommen.

Zur Lösung dieser Aufgabe wird erfindungsgemäß eine Vorrichtung zum Aufbau eines Protokoll-Stacks gemäß dem Anspruch 1 vorgeschlagen.

Der Erfindung liegt die Idee zugrunde, eine standardisierte, d.h. eine generische Emulationsumgebung zur Verfügung zu stellen, die es einem Testanwender erlaubt, Protokollschicht-Emulationen je nach Bedarf in einen Protokoll-Stack einzufügen und /oder mit anderen Protokollschicht-Emulationen, Skript-Interpretern oder Bedienkomponenten zu verbinden. Dadurch daß Protokollschichten mit standardisierten Schnittstellen ausgestattet werden, wird die Möglichkeit geschaffen, Protokollschichten in einfacher Weise untereinander zu verbinden bzw. Protokollschichten mit Skript-Interpretern oder Bedienkomponenten zu verbinden. Durch die Standardisierung der Schnittstellen wird überdies ermöglicht, daß der Testanwender nur wenig Vorwissen benötigt, um einen Protokoll-Stack zusammenzusetzen.

Jeder Protokollschicht und/oder jedem Skript-Interpreter wird hierbei eine Beschreibungsdatei zugeordnet, in der mindestens eine Eigenschaft der Protokollschicht und/oder des Skript-Interpreters beschrieben ist. Beim Zusammenstellen eines Protokollstacks werden die Beschreibungsdateien automatisch miteinander verbunden. Dies kann durch die genannte Instanz zur Verwaltung des Protokoll-Stacks geschehen oder durch eine separate Vorrichtung. Die Instanz bzw. die separate Vorrichtung stellt hierbei einen generischen Kommunikations- und Verwaltungsmechanismus für die Protokollemulationen zur Verfügung.

Bevorzugt umfaßt die Instanz mindestens einen lokalen Emulationsmanager, der mindestens einer Protokollschicht zugeordnet ist, und einen globalen Emulationsmanager, der mit jedem lokalen Emulationsmanager in Verbindung steht.

Jede Protokollschicht weist bevorzugt mindestens einen sogenannten Service-Access-Point auf, wobei jeder Service-Access-Point einen Eingang und/oder einen Ausgang zu einem anderen Service-Access-Point bereitstellt. Unter Service-Access-Point sind hierbei die logischen Zugänge zu einer Protokollschicht zu verstehen, in die Daten fließen (empfangend) oder an der Daten von der Protokollschicht zur Verfügung gestellt werden (sendend). Auf die Protokollemulation angewendet, werden die Ein- und Ausgänge der Emulationen dementsprechend SAPs genannt. In Abhängigkeit von der Funktion dieser Ein- und Ausgänge werden verschiedene Arten von Informationen erwartet. Erfindungsgemäß werden zwei Protokollschichtemulationen durch das Verbinden der geeigneten SAPs dieser Emulationen miteinander verbunden. Dabei sollte immer ein sendender SAP der einen Emulation mit einem empfangenden SAP der anderen Emulation verbunden werden. Beide SAPs sollten die gleiche Art von Daten handhaben.

Bevorzugt weist jede Protokollschicht weiterhin einen Eingang und einen Ausgang zur Verbindung mit der Instanz auf, insbesondere zur Verbindung mit einem lokalen Emulationsmanager.

Erfindungsgemäß ist es möglich, eine Protokollschicht derart zu konfigurieren, daß sie mit mindestens zwei höheren Protokollschichten und/oder mindestens zwei niedrigeren Protokollschichten verbindbar ist.

Die in den Beschreibungsdateien abgelegten Eigenschaften umfassen beispielsweise eine Beschreibung des mindestens einen Service-Access-Points, insbesondere durch eine Auflistung von Primitiven, die über den jeweiligen Service-Access-Point ausgetauscht werden können, einstellbare und/oder konstante Parameter der Protokollschicht sowie Aktionen der Protokollschicht.

Um den Testanwendern zu ermöglichen, daß sie mit geringstmöglichem Vorwissen auskommen, ist in einer besonders bevorzugten Weiterbildung der Erfindung vorgesehen, daß die Primitiven jeder Protokollschicht über standardisierte Strukturen und standardisierte Kodierung abbildbar sind.

Vorteilhaft ist es, wenn die Service-Access-Points durch Verwendung von Kommunikationsfunktionen der Instanz nachgebildet ist.

In einer bevorzugten Ausführungsform ist vorgesehen, daß sie weiterhin ein Interaktionselement, beispielsweise einen Skript-Interpeter umfaßt, über das ein Benutzer mit mindestens einer Protokollschicht interagieren kann. Die Vorrichtung kann weiterhin über eine graphische Benutzeroberfläche verfügen, über die der Benutzer den Protokoll-Stack zusammensetzen kann. Die graphische Benutzeroberfläche stellt bevorzugt protokollschicht-spezifische Information bereit, wobei insbesondere einstellbare und/oder konstante Parameter der Protokollschicht und/oder Aktionen der Protokollschicht durch den Benutzer modifizierbar sind. Die vom Benutzer vorgenommenen Modifikationen werden in den Beschreibungsdateien berücksichtigt.

Nach Beendigung der Eingabe des Benutzers werden von der Instanz bzw. der zusätzlichen Vorrichtung die aktuellen Beschreibungsdateien wunschgemäß zu einem Protokoll-Stack zusammengefügt, ohne daß ein weiteres Aktivwerden des Benutzers nötig wäre.

Gemäß einem weiteren Aspekt der Erfindung wird ein Verfahren zum Aufbau eines Protokoll-Stacks zur Verfügung gestellt, bei dem in einem ersten Schritt eine Protokollschicht mit mindestens einer standardisierten Schnittstelle bereitgestellt wird. In einem zweiten Schritt wird ein Protokoll-Stack, der mindestens eine derartige Protokollschicht enthält, wahlfrei zusammengesetzt. In einem dritten Schritt wird eine Instanz zur Verwaltung des derart zusammengestellten Protokoll-Stacks bereitgestellt. In einem vierten Schritt wird zu jeder Protokollschicht eine Beschreibungsdatei bereitgestellt, in der mindestens eine Eigenschaft der Protokollschicht beschrieben ist. In einem fünften Schritt werden die Beschreibungsdateien der Bestandteile des Protokoll-Stacks miteinander verbunden.

Die Erfindung umfaßt weiterhin einen Protokolltester, der eine erfindungsgemäße Vorrichtung zum Aufbau eines Protokollstacks umfaßt. Weitere vorteilhafte Weiterbildungen der Erfindung sind in den Unteransprüchen definiert.

Im Folgenden wird nunmehr ein Ausführungsbeispiel unter Hinweis auf die beigefügten Zeichnungen näher beschrieben. Es stellen dar:
- Fig. 1: in Blockschaltbilddarstellung das Zusammenwirken bestimmter Bauteile eines erfindungsgemäßen Protokolltesters;
- Fig. 2: in Blockschaltbilddarstellung ein Interface-Board des Protokolltesters gemäß Fig. 1;
- Fig. 3: in schematischer Darstellung einen Emulationsmanage ment-Layer;
- Fig. 4: in schematischer Darstellung die möglichen Aus- und Eingänge einer Emulation;
- Fig. 5: eine erste Benutzeroberfläche des Protokollstack-Editors;
- Fig. 6: eine zweite Benutzeroberfläche des ProtokollstackEditors;
- Fig. 7: in Blockschaltbilddarstellung eines mit der Erfindung realisierbaren Protokollstacks;
- Fig. 8: in detaillierterer Darstellung die Interaktionen des Protokollstacks von Fig. 7.

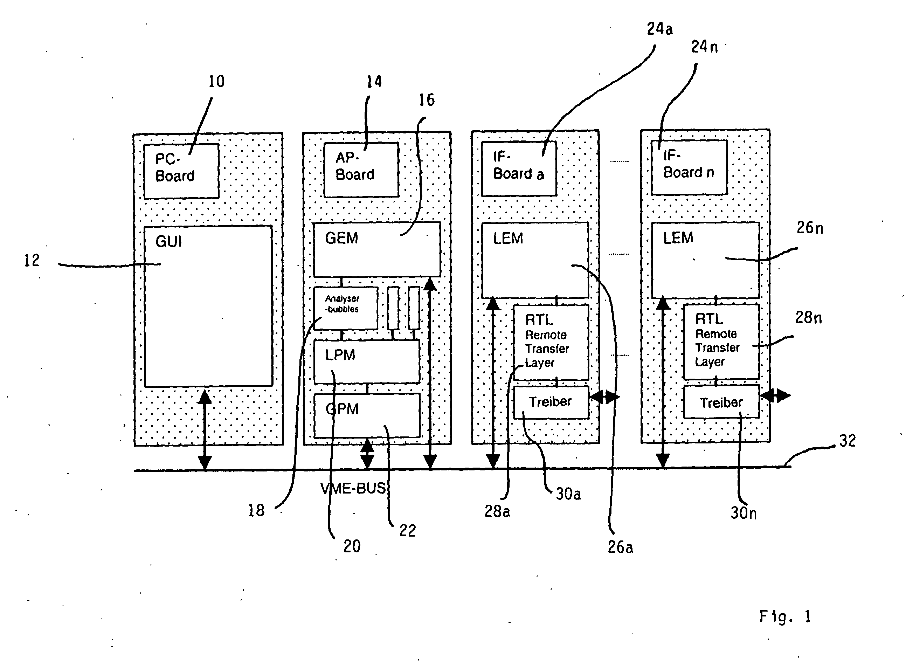

Fig. 1 zeigt in Blockschaltbildform Bestandteile eines erfindungsgemäßen Protokolltesters, nämlich ein PC-Board 10, beispielsweise ein Intel Pentium 133 CPU mit Windows NT 4.0 Betriebssystem, 64 MB RAM sowie 4 GB Harddisk, mit einer graphischen Benutzerschnittstelle (GUI; graphical user interface) 12, ein Application Board 14, beispielsweise eine Applikationsprozessorkarte mit einem Motorola 68040 CPU mit vxWorks Echtzeitbetriebssystem sowie 32 MB RAM. Die Application Board 14 enthält einen globalen Emulationsmanager 16, Analyzer Bubbles 18 sowie einen lokalen und eine globalen Pipeline-Manager 20, 22. Der Protokolltester enthält weiterhin mehrere, bevorzugt sechs Interface-Boards 24a, 24n, beispielsweise für E1/T1, S0/U2B1Q/V/X und ATM-Interfacestandards. Die Realisierung kann erfolgen beipielsweise durch eine Motorola 68040 oder eine Intel 960 CPU mit vxWorks Echtzeitbetriebssystem. Auf jedem Interface-Board befindet sich ein lokaler Emulationsmanager 26a, 26n, ein Remote Transfer Layer 28a, 28n sowie ein Treiber 30a, 30n. Alle Boards kommunizieren über einen VME-Bus. Ein Emulationsmanagement-Layer wird gebildet aus den lokalen Emulationsmanagern sowie einem globalen Emulationsmanager. Der Emulationmanagement-Layer dient zur Steuerung der Zusammenarbeit, der Installation sowie der Konfiguration eines Protokoll-Stacks. Um ein einfaches Zusammensetzen eines Protokoll-Stacks zu ermöglichen und vom Betriebssystem unabhängig zu sein, sind die Interface-Boards 24a bis 24n einheitlich, d.h. standardisiert aufgebaut.

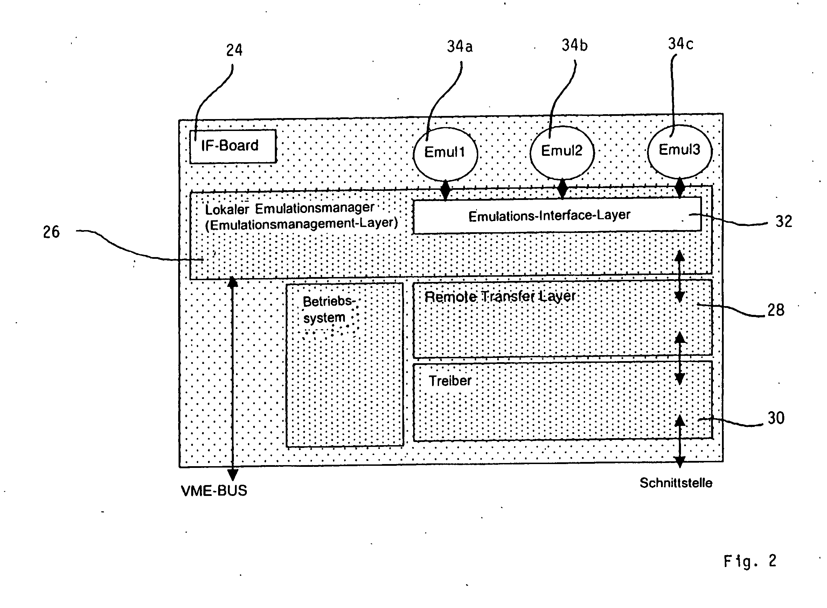

Fig. 2 zeigt ein Interface-Board 24, woraus hervorgeht, daß ein lokaler Emulationsmanager 26 einen Emulations-Interface-Layer 32 enthält, der eine Abstraktionsschicht darstellt zwischen dem Betriebssystem und jeder Emulation 34a, 34b, 34c. Er stellt eine Schnittstelle für logische Kommunikationswege zu den Emulationen bereit und verwendet externe Queues, um sie zu implementieren. Der Emulations-Interface-Layer 32 stellt den Emulationen Funktionen bereit, um Speicher zuzuweisen, Buffer zuzuteilen, Timer zu starten und zu stoppen und Ablaufverfolgungsnachrichten zu senden. Lediglich für die Installation und die Deinstallation der Emulationen importiert der Emulations-Interface-Layer 32 Funktionen, um die Emulationen zu initialisieren, zu deinitialisieren und eine Funktion zum Start der Emulation.

Administrative Abfragen zum globalen Emulations-Manager 16 können dem Zweck dienen, eine Emulation innerhalb einer spezifizierten Protokoll-Stacks, d.h. auf Emulationsebene betrachtet innerhalb einer sogenannten Emulationspipeline zu erzeugen oder zu löschen, Parameter einer Emulation zu konfigurieren oder abzufragen, ein Menüsystem für Emulationsparameter abzufragen und Kommunikationspfade zwischen Emulationen zu verbinden. Jede administrative Abfrage an den lokalen Emulationsmanagement-Layer wird durch einen Funktionsaufruf und einen ASCII-String, der leicht lesbar ist, durchgeführt. Administrative Abfragen von der Benutzerseite an lokale Emulationsmanagement-Layer werden soweit möglich ohne Unterbrechung der Emulation gehandhabt. Generell kann hierbei eine Emulation eine oder mehrere Protokollschichten umfassen.

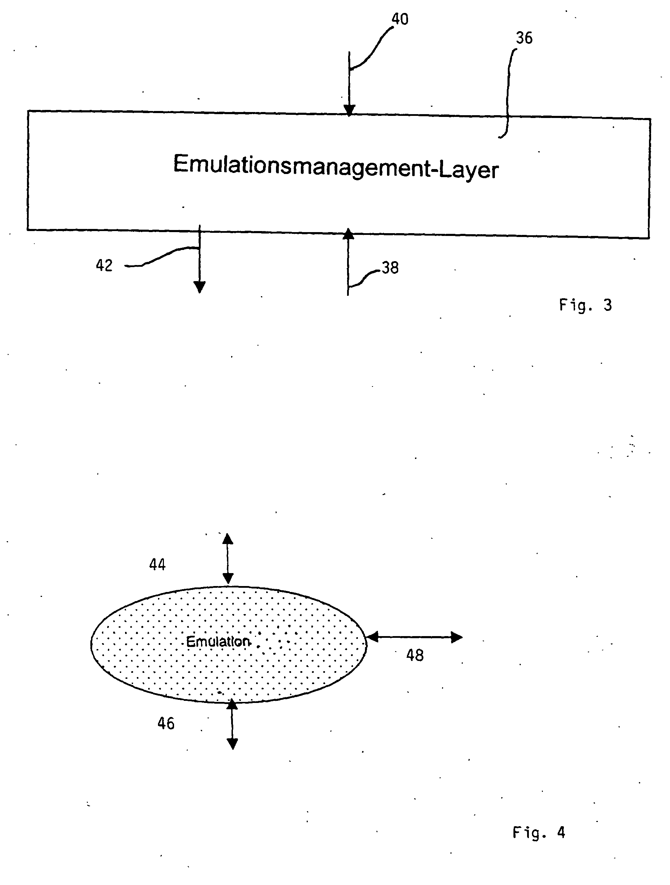

Fig. 3 zeigt schematisch einen Emulationsmanagement-Layer 36, der über einen Eingang 38 mit den Emulations-Interface-Layern der einzelnen Emulationen in Verbindung steht sowie über einen Eingang 40 mit dem globalen Emulations-Manager 16 für die Übernahme von Funktionen, der Installation und der Konfiguration des Protokoll-Stacks sowie für Ereignisse, die von außen beispielsweise vom Benutzer kommen. Über einen Ausgang 42 kann der Emulationsmanagement-Layer 36 eine Emulation initialisieren, deinitialisieren und starten.

Fig. 4 zeigt eine Emulation 34, die - wie erwähnt - eine oder mehrere Protokollschichten umfassen kann. Über standardisierte SAPs sind Verbindungen möglich zu einer darüberliegenden Schnittstelle, siehe Pfeil 44, zu einer darunterliegenden Schnittstelle, siehe Pfeil 46, sowie zur EmulationsmanagementSchicht, siehe Pfeil 48. Unter Schnittstelle sind weitere Protokollschichten, Emulationen, Skript-Interpreter zu verstehen.

Die SAPs der einzelnen Schnittstellen können durch den Benutzer in beliebiger Weise miteinander verbunden werden. Zur Realisierung der Verbindung, siehe unten. Verwaltungskommandos an die Verwaltungsinstanz, d.h. den aus dem globalen und den lokalen Emulationsmanagern gebildeten Emulationsmanagement-Layer werden durch lesbare ASCII-Text-Strings formuliert. Die folgenden Schlüsselwörter wurden für den Request (Anforderungs-) String definiert:
create 〈emulname〉[,〈createname〉[,〈searchpath〉]]
   Dieses Schlüsselwort wird verwendet, um anzufordern, daß die Interfaceschicht eine Emulation, die als 〈emulname〉 bekannt ist, lädt. Wenn der Parameter 〈createname〉 gegeben ist, erhält die Emulation diesen Namen innerhalb der Emulationspipeline. Andernfalls erhält die Emulation den Namen 〈emulname〉 innerhalb der Pipeline. Keine Emulation darf einen Namen mit einer Zahl als erstes Zeichen haben, weil dies eine Identifikation für eine Ausgangs- oder Eingangsverbindung zu einer physikalischen Schnittstelle ist. Wenn der Parameter (searchpath) gegeben ist, wird das Objektmodul innerhalb des Verzeichnisses des gegebenen Suchpfads gesucht werden.
unload 〈emulname〉
   Innerhalb der Emulationspipeline wird eine Emulation gesucht werden, die in der Pipeline den Namen 〈emulname〉 trägt. Wenn die Emulation gefunden ist, wird sie aus der Pipeline gelöscht.
connect 〈emulname1〉 .〈output1〉,〈emulname2〉.〈input2〉
connect 〈logical link identifier〉,〈emulname2〉 . 〈input2〉
connect 〈emulname1〉 .〈output1〉,〈logical link identifier〉
connect 〈boardnumber1〉 .〈boardlink1〉,〈emulname2〉 .〈input2〉
connect 〈emulname1〉 .〈output1〉,〈boardnumber2〉 .〈boardlink2〉
connect 〈boardnumber1〉 .〈boardlink1〉,〈logical link identifier〉
connect 〈logical link identifier〉,〈boardnumber2〉 .〈boardlink2〉
   Das connect-Schlüsselwort wird verwendet zur Herstellung von Verbindungen zwischen:
   - einem Ausgang einer Emulation mit einem Eingang einer anderen Emulation;
   - einer logischen Verbindung einer physikalischen Schnittstelle (durch den logischen Eingangsverbindungsidentifikator (logical input link identifier) als eine Nummer bezeichnet) mit einem Eingang einer Emulation;
   - einem Ausgang einer Emulation mit einer logischen Ausgangsverbindung einer physikalischen Schnittstelle (durch einen logischen Verbindungsidentifikator (logical link identifier) als eine Nummer bezeichnet) ;
   - eine Interboardverbindung (die aus der lokalen Boardnummer und einer Verbindungsnummer 0 ... 31 dieses Boards besteht) ;
   - ein Ausgang einer Emulation zu einer Interboardverbindung (die aus der lokalen Boardnummer und einer Verbindungsnummer 0...31 dieses Boards besteht)
   - einer Interboardverbindung (die aus einer lokalen Boardnummer und einer Verbindungsnummer 0...31 dieses Boards) mit einer logischen Ausgangsverbindung eines physikalischen Interface (durch einen logischen Verbindungsidentifikator (logical link identifier) als eine Nummer bezeichnet);
   - einer logischen Verbindung eines physikalischen Interface (durch einen logischen Inputverbindungsidentifikator (logical input link identifier) als eine Nummer bezeichnet) an eine Interboardverbindung (die aus der lokalen Boardnummer und einer Verbindungsnummer 0...31 dieses Boards besteht).
   Vereinbarungsgemäß ist zu beachten, daß keine Emulation einen Namen mit einer Ziffer als erstes Zeichen haben darf, weil dies eine Identifikation für einen Ausgang oder Eingang zu einer physikalischen Schnittstelle ist.
disconnect 〈emulname〉 . 〈output〉
disconnect 〈logical link identifier〉
disconnect 〈boardnumber〉 . 〈boardlink〉
   Das Schlüsselwort zur Verbindungslösung wird verwendet, um eine bestehende Verbindung zu lösen, die ausgeht von
   - einer Emulation (z.B. zu einer anderen Emulation);
   - einer logischen Verbindung, die durch einen logischen Verbindungsidentifikator als eine Nummer bezeichnet ist;
   - eine Interboardverbindung durch die Boardnummer und die Interboardverbindung.
   Vereinbarungsgemäß muß nur der Verbindungsursprung angegeben werden.
config 〈emulname〉 .〈parametername〉 =〈value〉
   Dieses Schlüsselwort wird verwendet, um einen Parameter einer Emulation zu konfigurieren. Der Name der Emulation ist durch 〈emulname〉 gegeben, der zu konfigurierende Parameter der Emulation ist mit (parametername) und der dem bezeichneten Parameter zu gebende Wert mit (value) bezeichnet.
query 〈emulname〉 .〈parametername〉
   Dieses Schlüsselwort wird verwendet, um von der Emulationsmanagementschicht den Wert eines Parameters abzufragen der durch eine gegebene Emulation verwendet wird. Der Name der Emulation ist gegeben durch 〈emulname〉, der Parametername ist gegeben durch (parametername). Die Emulationsmanagementschicht sendet eine Antwortnachricht die aus einem lesbaren ASCII-String besteht an die abfragende Applikation.
list
   Das Schlüsselwort list wird verwendet zur Anfrage bei der Emulationsmanagementschicht eine Liste von Emulationspipelines zurückzusenden. Die Emulationsmanagementschicht sendet die Antwortnachricht, die aus einem lesbaren ASCII-String besteht, an die abfragende Applikation.
show [〈emulname〉]
   Dieser Befehl wird verwendet, um Informationen betreffend eine Emulationspipeline zu erhalten. Es ist möglich, den Namen einer Emulation 〈emulname〉 der Pipeline anzugeben, dann wird die Antwortinformation auf diese eine Emulation beschränkt. Die Antwort auf diesen Befehl hat das folgende Format:
   〈outputname〉 -〉 -〉〈destination1〉
   ....
   〈inputname〉 -〉〈- -〉〈source1〉
   ....

Die Emulation, die unter Verwendung des Moduls des Namens 〈modulname〉 läuft, wird innerhalb der Pipeline als 〈emulationname〉 bezeichnet.

Diese Emulation hat mehrere Ausgangsverbindungen und Eingangsverbindungen. Diese Verbindungen werden 〈outputname1〉...〈outputnameX〉 und 〈inputname1〉...〈inputnameX〉 genannt. Jeder Ausgang muß mit einer Zieladresse verkettet sein. Die Zieladresse wird angegeben mit 〈destination1〉 ...〈destinationX〉. Jede Eingangsverbindung muß mit einer Sourceline verkettet sein. Diese Sourcelines werden 〈source1〉...〈source2〉 genannt.
Die Definition einer Zieladresse kann eines der folgenden Syntaxformate haben:
〈destinationemulation〉.〈destinationinput〉
LDD (= Logical Data Destination)
AP (= Applikation, die angebunden werden kann)
Wenn die Zieladresse (destination) der Ausgangsverbindung eine Emulation ist, dann wird der Name der entfernten Emulation (destinationemulation) und der Name des entfernten Eingangs (destinationinput) angegeben. Wenn die Ausgangsverbindung direkt an die Applikation oder die logische Datenzieladresse (logical data destination) gekoppelt ist, ist dies durch die Worte LDD oder AP gegeben.
Die Definition einer Quelle kann eines der folgenden Syntaxformate besitzen:
〈sourceemulation〉 . 〈sourceoutput〉
LDS (= Logical Data Source)
AP
Wenn die Quelle zur Eingangsverbindung eine Emulation ist, dann werden der Name der entfernten Emulation (sourceemulation) und der Name des entfernten Ausgangs (sourceoutput) angegeben. Wenn die Eingangsverbindung direkt an die Applikation oder die logische Datenquelle (logical data source) gekoppelt ist, ist dies durch die Worte AP oder LDS angegeben.
menu 〈emulname〉
   Dieser Befehl wird verwendet, um Informationen bezüglich der Konfiguration und Abfragefunktionalität der Emulation mit dem Namen 〈emulname〉 zu erhalten. Die gegebene Information kann verwendet werden, um dem Anwender einen komfortablen Menüaufbau zu zeigen. Die Antworten auf diesen Befehl dienen der Definition von Variablen und Untermenüs. Variablen- und Untermenüangaben sind in Zeilen aufgeteilt. Die Antworten auf diesen Befehl haben die folgenden Schlüsselworte:
〈name〉:
   type = int 〈min〉...〈max〉;
   access = 〈access〉;
   default = 〈default〉;
   Die Variable ist vom Integer-Typ. Der Name der Variablen ist gegeben durch 〈name〉. Der Integer-Wert der Variablen muß im Bereich 〈min〉 bis 〈max〉 liegen.
〈name〉
   type = enum 〈value1〉/〈value2〉/ ... ;
   access = 〈access〉;
   default = 〈default〉;
   Die Variable ist vom Auswahltyp. Der Name der Variablen ist durch 〈name〉 gegeben. Die möglichen Werte der Variablen sind mit der Liste von 〈value1〉, 〈value2〉 usw. gegeben.
〈name〉:
   type=string〈length〉;
   access =〈access〉;
   default =〈default〉;
   Die Variable ist ein String von ASCII-Zeichen. Der Name der Variablen ist gegeben durch 〈name〉. Die Länge des Strings ist gegeben durch 〈length〉.
〈name〉:
   type=numbers〈length〉;
   access=〈access〉
default=〈default〉
   Die Variable ist ein String von Zahlen ('0'...'9'). Der Name der Variablen ist gegeben durch 〈name〉. Die Länge des Strings ist gegeben durch 〈length〉.
〈name〉
   type=hexnumbers 〈length〉
   access=〈access〉
   default=〈default〉
   Die Variable ist ein String von Hexadezimalnummern ('0'...'9', 'a'..'f') Zeichen. Der Name der Variablen ist gegeben durch 〈name〉. Die Länge des Strings ist gegeben durch 〈length〉.
〈name〉
   type=telnumbers 〈length〉
   access=〈access〉
   default=〈default〉
   Die Variable ist ein String von Telefonnummernzeichen ('0' ... '9', 'a'..'f', '#'). Der Name der Variablen ist gegeben durch 〈name〉. Die Länge des Strings ist gegeben durch 〈length〉.
〈name〉
   type=bitstring〈length〉
   access=〈access〉
   default=〈default〉
   Die Variable ist eine Anzahl von Bits. Jedes Bit ist modifiziert durch ein Digit ('0' oder '1') eines gegebenen Strings. Die Länge des Strings ist gegeben durch 〈length〉.

Jede Variable ist mit einer Zugangsklasse 〈access〉 des Typs 'rd' (nur lesen), 'wr' (nur schreiben) oder 'rdwr' (lesen und schreiben) verknüpft, die als ein Parameter nach der Angabe des Variablentyps angegeben wird. Jede Variable kann als ein Feld angeordnet sein. In diesem Fall wird der Name der Variablen um eine Indexangabe erweitert. Jede Indexangabe ist in Klammern eingefügt '['and']'. Der Typ einer Indexspezifikation kann eine normales Ganzzahl oder eine Aufzählnummer sein. Definition:
〈namestring〉 [int〈min〉...〈max〉]:
   In diesem Fall ist der Index zur Variablen mit dem Namen 〈namestring〉 vom Integer-Typ. Der Umfang der Variablen ist durch 〈min〉...〈max〉 gegeben.
〈namestring〉 [enum〈value1〉/〈value2〉/...]:
   In diesem Fall ist der Index zur Variablen mit dem Namen 〈namestring〉 vom Aufzählungsnummerntyp. Die möglichen Werte des Index sind als eine Liste von 〈value1〉...〈value2〉 usw. gegeben.

Es ist mögich eine Struktur von Untermenüs in dem Menü unterzubringen. Die Syntax für eine Untermenüangabe ist vom folgenden Format:

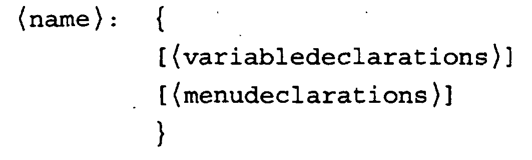

Der Name des Untermenüs ist durch 〈name〉 gegeben. Die Variablen oder weiteren Untermenüs, die zu dem aktuell angegebenen Untermenü gehören, sind in Klammern angefügt '{'and'}'.
bindreq 〈emulname〉 .〈input〉 [,〈data〉]
   Dieser Befehl wird verwendet, um eine Bind-Auftrags-Primitive (bind request) an einen Eingang einer Emulations zu leiten. Die Emulation wird durch ihren Namen 〈emulname〉 gegeben und durch ihre Eingangsverbindung 〈input〉. Die Primitive wird mit Daten der optionalen Parameter 〈data〉 gefüllt (in hexadezimalem Format).
sendreq 〈emulname〉 .〈input〉,〈primld〉 [,〈data〉]
   Dieser Befehl wird verwendet, um eine Primitive an den Eingang einer Emulation zu leiten. Die Emulation ist durch ihren Namen 〈emulname〉 und ihre Eingangsverbindung 〈input〉. Es wird eine Primitive mit dem angegebenen Identifikator 〈primld〉 erzeugt und die Primitive wird mit Daten des optionalen Parameters 〈data〉 (in hexadezimalem Format) gefüllt.
exec 〈filename〉
   Dieser Befehl wird verwendet, um den Emulationsmanagement-Layer mit dem Lesen des Befehls-Strings für die obere Schnittstelle von der Datei mit dem Namen (filename) zu beauftragen.
board 〈boardnumber〉 : 〈request〉
   Dieser Befehl wird verwendet, um einen Auftrag 〈request〉 an
   das durch 〈boardnumber〉 gegebene Board zu leiten.

Wie erwähnt, stellt die durch die lokalen und den globalen Emulations-Manager gebildete Verwaltungsinstanz, oben auch als Emulationsmanagement-Layer bezeichnet, einen generischen Kommunikations- und Verwaltungsmechanismus für die Emulationen zur Verfügung. Sinn dieser Verwaltungsinstanz ist es, die Protokollemulationen, die Skriptinterpreter und die Bedienkomponenten, die für den Protokoll-Stack bzw. für den gewünschten Teil des Protokoll-Stacks benötigt werden, in ein abstraktes Gebilde, die Emulations-Pipeline zu laden und zu verbinden. Dieses Laden und Verbinden kann der Anwender des Protokolltestsystems selbstständig und ohne tiefergehendes Verständnis der Struktur des Protokolltestsystems am Protokolltester steuern. Für diese Steuerung kann eine graphische Benutzeroberfläche oder eine Textdatei verwendet werden.

Die den jeweiligen Protokollschichten bzw. Protokollemulationen zugeordneten Beschreibungsdateien ermöglichen es der graphischen Benutzeroberfläche, Informationen über die Protokollemulationen darzustellen. Diese Informationen bestehen im wesentlichen aus:
- einer allgemeinen Beschreibung über die Protokollemulation, den Skriptinterpreter oder die Bedienkomponente selbst;
- den Namen aller vorhandenen Service-Access-Points für die Eingangs- und die Ausgangsrichtung;
- eine Beschreibung jedes einzelnen Service-Access-Points;
- einer Auflistung der Primitiven, die über jeden einzelnen Service-Access-Point ausgetauscht werden können;
- einer Beschreibung aller Primitiven;
- einer Auflistung der Parameter für jedes einzelne Primitive;
- einer Beschreibung aller Parameter, die in Primitiven verwendet werden;
- einer Beschreibung der Variablen, Konstanten und Aktionen, die innerhalb der Protokollemulation gesetzt, abgefragt oder gestartet werden können, wobei diese Beschreibung auch die Gruppierung in Menues, Untermenues und Felder ermöglicht;
- sowie zusätzliche Angaben für Statistikfunktionen.

Das generische Konzept der Verwaltungsinstanz und die Informationen aus den Beschreibungsdateien ermöglichen es dem Anwender auf komfortable Weise am Testsystem Module zu den gewünschten Applikationen zusammenzustellen. Diese Flexibilität erhöht für viele Anwendungen den Nutzwert des Protokolltestsystems, spart erheblichen Entwicklungsaufwand sowie Verzögerungen im Testfortschritt.

Die in den Beschreibungsdateien zur Verfügung gestellten Informationen können auch von anderen Werkzeugen im Protokolltest verwendet werden, um den Benutzer besser zu führen und ihn bei der Erstellung von Testfällen mit protokollspezifischem Wissen zu unterstützen.

Die Beschreibungsdatei, die für jede Protokollemulation, jeden Skript-Interpreter und jedes Bedienelement vorliegen muß, ist im Textformat gehalten. Im Folgenden ein Auszug aus einer solchen Datei, deren Inhalt sich einem Fachmann auf dem Gebiet der vorliegenden Erfindung ohne weiteres erschließt:

### [GENERAL]

Name=ss7isup1
Description="ISDN User Part";
Type=Emulation;
[STATISTIC]
Statistic Module: type=enum ON/OFF; access=rdwr; default=OFF;
Statistic Interval: type=int 1..3600; access=rdwr; default=10;
[MENU] 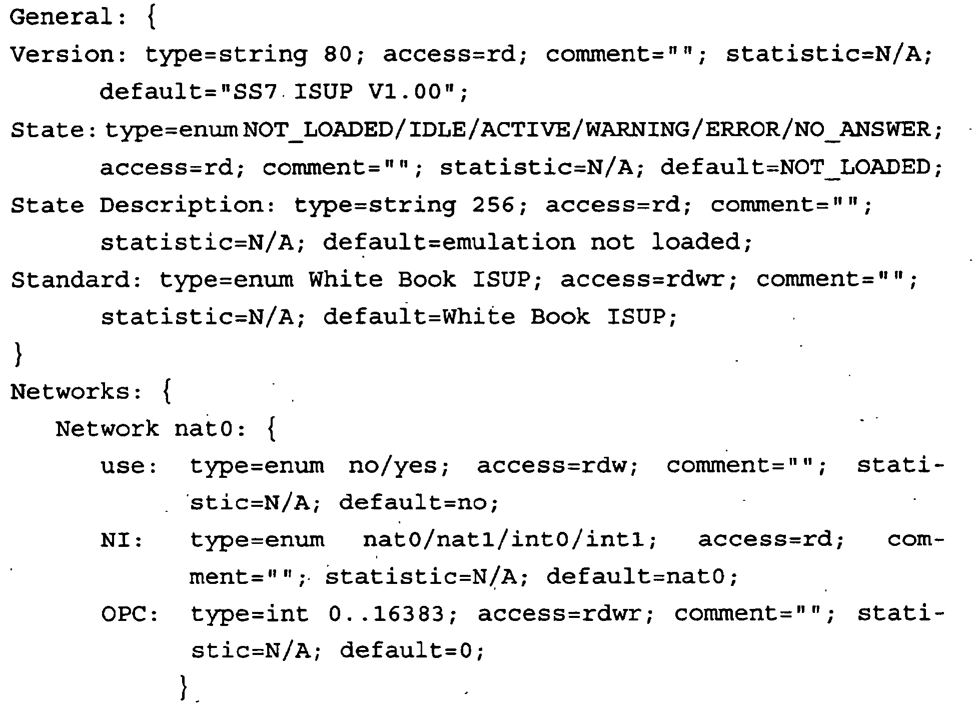
[SAPs]
   - Network nat0:: mode=in; location=lower; comment=" "; asps = UDAT_IND;
   - Network int1:: mode=in; location=lower; comment=" ";
   - Call Terminal:: mode=in; location=upper; comment=" "; asps = DATA_REQ;
   - Maintenance Terminal:: mode=in; location=upper; comment=" ";
   asps=RESET_REQ,RESET_RES,
   CONTRECHECK_REQ, STOP_REQ,
   BLOCKING_REQ, BLOCKING_RES,
   UNBLOCKING_REQ,
   UNBLOCKING_RES;
   - Network nat0:: mode=out; location=lower; comment=" "; asps=UDAT_REQ;
   - Network int1:: mode=out; location=lower; comment=" "; asps=UDAT_REQ;
   - Call Terminal:: mode=out; location=upper; comment=" "; asps=DATA_IND;
   - Maintenance Terminal:: mode=out; location=upper; comment=" ";
   asps=RESET_IND,
   RESET_CNF;
   CONTRECHECK CNF,
   STOP_CNF,
   BLOCKING_IND,
   BLOCKING_CNF,
   UNBLOCKING_IND,
   UNBLOCKING CNF,
   STARTRESET IND,
   CALLFAILURE_IND,
   MAINTENANCE_IND;
[ASPs]
   - RESET_REQ:: id=0x0001; comment=" ";
   Para1=NI; para2=DPC; para3=CIC;
   - RESET_RES:: id=0x0002; comment=" ";
   Para1=NI; para2=DPC; para3=CIC;
   - CONTRECHECK_REQ:: id=0x0003; comment=" ";
   Para1=NI; para2=DPC; para3=CIC;
[PRMs]
   - NI :: comment=" "; size=2; values=nat0=2/nat1=3/int0=0/int1=1; default=2;
   - DPC :: comment=" "; size=2;
   - OPC :: comment=" "; size=2;
   - CIC :: comment=" "; size=2;

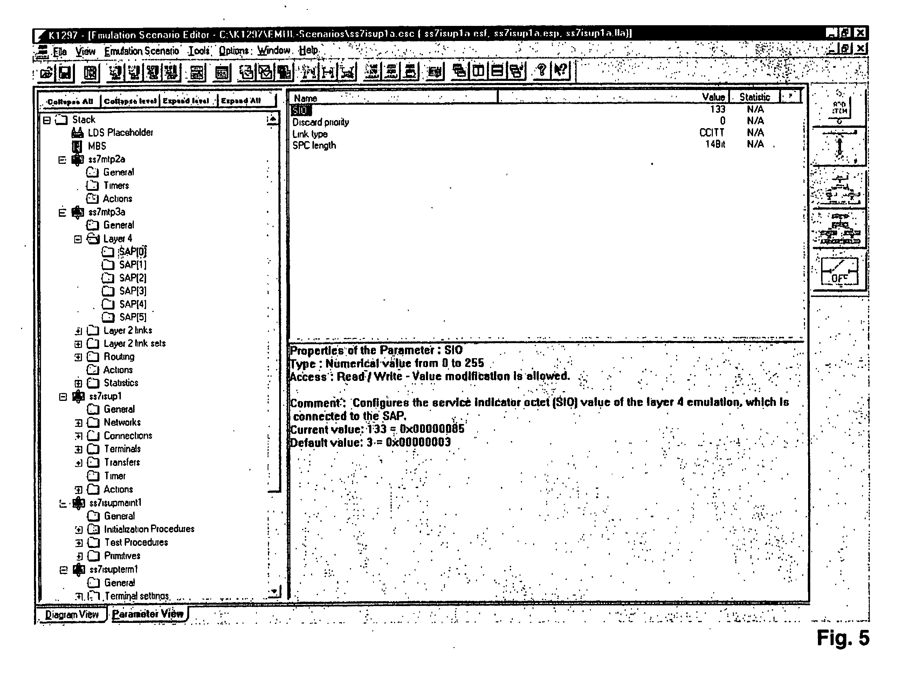

Im Rahmen der graphischen Benutzeroberfläche des Ausführungsbeispiels wird ein Editor bereitgestellt, der einen Benutzer beim Zusammenstellen eines Protokoll-Stacks unterstützt. Fig. 5 zeigt eine erste Bedienoberfläche des Editors, die sogenannte Diagram-View-Oberfläche als Beispiel einer generisch arbeitenden graphischen Benutzeroberfläche. Rechts auf der graphischen Benutzeroberfläche sind vom Benutzer Bedienfunktionen anwählbar, mit denen eine Protokoll-Stack aufgebaut werden kann. Links auf der graphischen Benutzeroberfläche ist ein Protokoll-Stack zu erkennen, wobei der Schicht ss7isup1 in paralleler Weise zwei Schichten übergeordnet sind, nämlich die Schichten ss7isupterml und ss7isupmaint1.

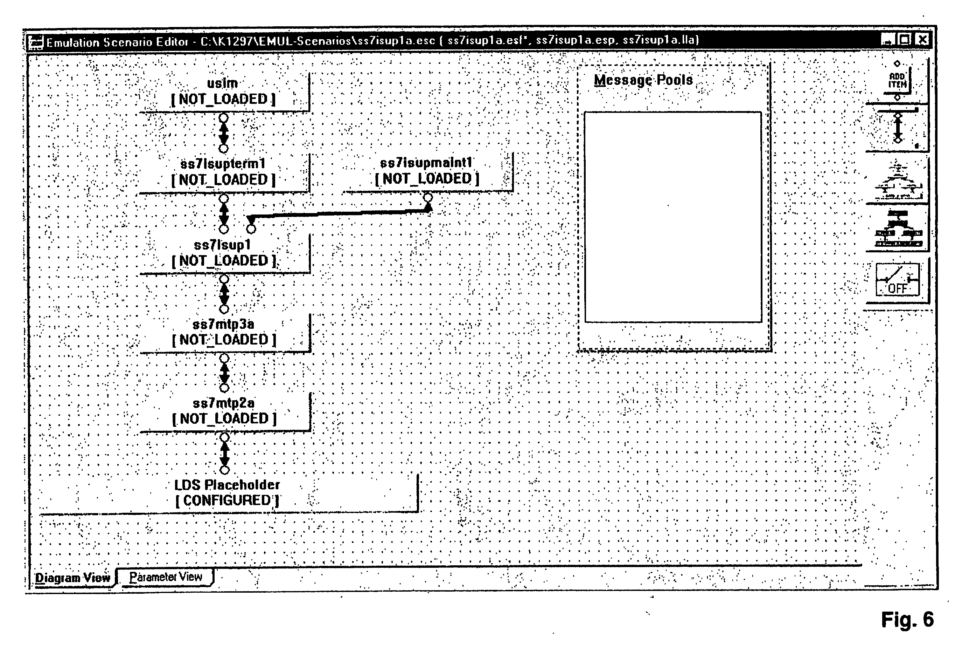

Fig. 6 zeigt eine zweite Benutzeroberfläche des Protokollstack-Editors, nämlich die Parameter-View-Benutzeroberfläche. Hier können Variablen, Konstanten und Aktionen von Protokoll (schicht-)emulationen bearbeitet werden. Im linken Teilfenster ist zunächst erkennbar, daß man sich im Verzeichnis Stack befindet, dem verschiedene Protokollschichten, beispielsweise ss7mtp2a, ss7mtp3a, ss7isup1 usw. untergeordnet sind. Innerhalb der jeweiligen Schicht sind verschiedene Directories anwählbar, beispielsweise General für Allgemeines, Timers für Zeitmarken sowie Actions für Aktionen. Bei der Schicht ss7mtp3a sind im Unterverzeichnis Layer 4 die einzelnen SAPs erkennbar. Unter der Schicht SS7isupmaint1 ist erkennbar, daß Primitiven angewählt werden können. Die rechten beiden Teilfenster zeigen Informationen zum SAP (0) des Layers 4 der Protokollschicht ss7mtp3a.

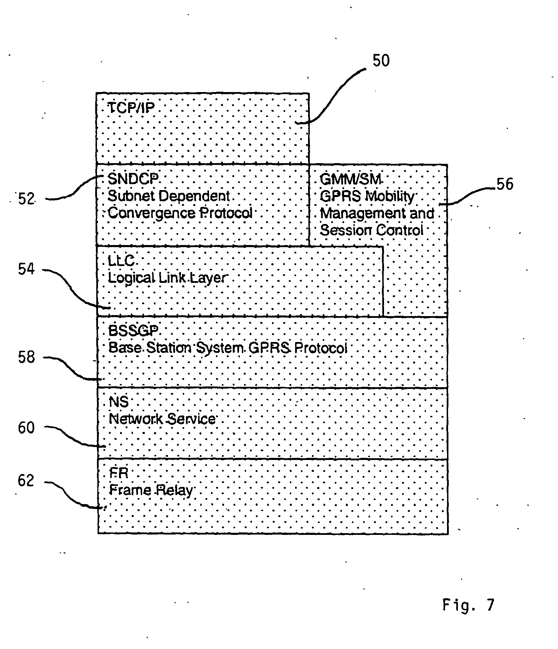

Fig. 7 zeigt beispielhaft eine andere Darstellung eines mit der Erfindung realisierbaren Protokoll-Stacks. Von oben nach unten sind folgende Schichten aneinandergereiht:
- TCP/IP 50;
- SNDCP (subnet dependent convergence protocol) 52;
- LLC (logical link layer) 54;
- Parallel zum SNDCP 52 und LLC 54: GMM/SM (GPRS mobility management and session control) 56;
- BSSGP (bay station system GPRS protocol) 58;
- NS (network service) 60;
- FR (frame relay) 62.

Der gezeigte Protokoll-Stack ist dem Gb-Interface von GPRS entnommen. Die Protokollschichten FR, NS, BSSGP und LLC sind auf dem realisierten Protokolltester innerhalb einer einzigen Emulation mit der Bezeichnung LLC/BSSGP/NS/FR zusammengefaßt. Die Protokollschicht GMM/SM ist durch ein FORTH-Skript zu simulieren. Die TCP/IP-Pakete sind innerhalb eines Ladegenerators gespeichert, der in der Lage ist, Pakete kontinuierlich zu versenden.

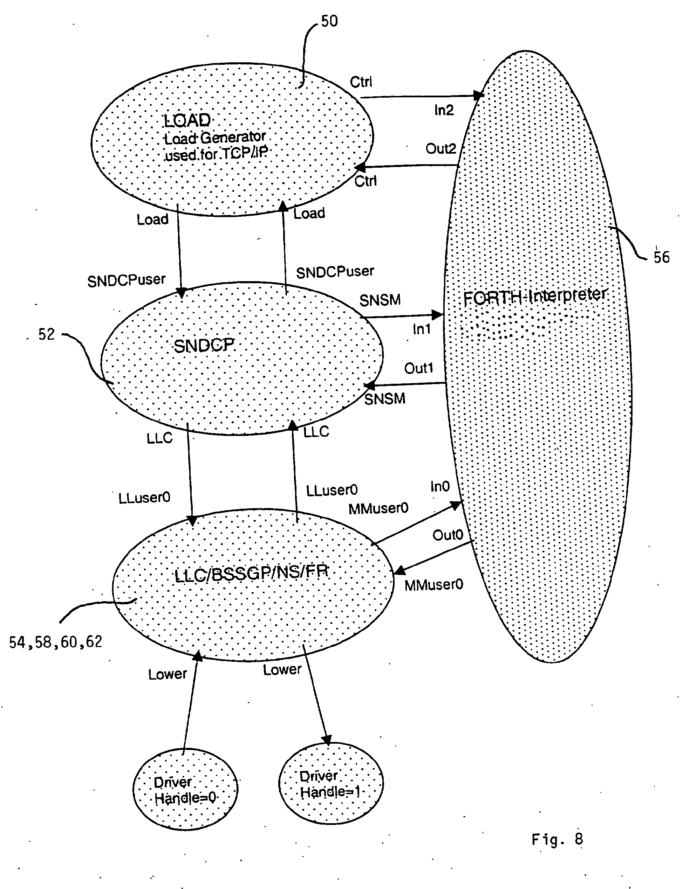

Fig. 8 zeigt in detaillierterer Form die Interaktionen der einzelnen Protokollschichten des in Fig. 7 dargestellten Protokoll-Stacks.

Zur Erzeugung des Protokoll-Stacks der Figuren 7 und 8 sind lediglich die folgenden Verwaltungskommandos an die Verwaltungsinstanz zu geben:
create LLC1
create SNDCP
create LOAD
creat FORTH1197, FORTH

connect LOAD.Load,SNDCP.SNDCPuser
connect SNDCP.SNDCPuser, LOAD.Load

connect LOAD.Ctrl,FORTH.In2
connect FORTH.Out2,LOAD.Ctrl.

connect SNDCP.LLC,LLC1.LLuser0
connect LLC1.LLuser0,SNDCP.LLC

connect SNDCP.SNSM,FORTH.Inl
connect FORTH.Out1,SNDCP.SNSM

connect LLC1.MMuser0,FORTH.In0
connect FORTH.Out0,LLC1.MMuser0

connect LLC1.Lower,1
connect 0,LLC1.Lower

## Patentansprüche

1. Vorrichtung zum Aufbau eines Protokoll-Stacks, wobei die Vorrichtung umfasst:
a) mindestens eine Protokollschicht mit mindestens einer standardisierten Schnittstelle (44, 46);
b) eine Instanz (16,26) zur Verwaltung eines Protokoll-Stacks, der die mindestens eine Protokollschicht aus a) enthält, wobei jeder der mindestens einen Protokollschicht eine Beschreibungsdatei zugeordnet ist, in der mindestens eine Eigenschaft der mindestens einen Protokollschicht beschrieben ist,
**dadurch gekennzeichnet,**
**dass** die Vorrichtung Mittel (36; 16, 26) aufweist, mit denen die Beschreibungsdateien der Bestandteile eines Protokoll-Stacks miteinander verbindbar sind.

2. Vorrichtung nach Anspruch 1,
**dadurch gekennzeichnet,**
**dass** sie weiterhin mindestens einen Skript-Interpreter umfasst, wobei dem mindestens einen Skript-Interpreter eine Beschreibungsdatei zugeordnet ist, in der mindestens eine Eigenschaft des mindestens einen Skript-Interpreters beschrieben ist.

3. Vorrichtung nach einem der Ansprüche 1 oder 2,
**dadurch gekennzeichnet,**
**dass** die Instanz umfasst:
- mindestens einen lokalen Emulationsmanager (26), der mindestens einer Protokollschicht zugeordnet ist, und
- einen globalen Emulationsmanager (16), der mit jedem des mindestens einen lokalen Emulationsmanagers in Verbindung steht.

4. Vorrichtung nach einem der vorhergehenden Ansprüche,
**dadurch gekennzeichnet,**
**dass** jede der mindestens einen Protokollschicht mindestens einen Service Access Point aufweist, wobei jeder dieses/dieser Service Access Point/s einen Eingang und/oder einen Ausgang zu einem anderen Service Access Point aufweist.

5. Vorrichtung nach Anspruch 4,
**dadurch gekennzeichnet,**
**dass** die mindestens eine Eigenschaft der mindestens einen Protokollschicht umfasst:
- Beschreibung des/der Service Access Point/s, insbesondere durch eine Auflistung von Primitiven, die über den/die jeweiligen Service Access Point/s ausgetauscht werden können, und/oder
- einstellbare und/oder konstante Parameter der mindestens einen Protokollschicht und/oder
- Aktionen der mindestens einen Protokollschicht.

6. Vorrichtung nach einem der Ansprüche 4 oder 5,
**dadurch gekennzeichnet,**
**dass** einer des/der Service Access Point/s, insbesondere jeder des/der Service Access Point/s, durch Verwendung von Kommunikationsfunktionen der Instanz (16, 26) nachgebildet ist.

7. Vorrichtung nach einem der vorhergehenden Ansprüche,
**dadurch gekennzeichnet,**
**dass** jede der mindestens einen Protokollschicht einen Eingang und einen Ausgang zur Verbindung mit der Instanz (16, 26) aufweist.

8. Vorrichtung nach den Ansprüchen 3 und 7 in Und-Kombination,
**dadurch gekennzeichnet,**
**dass** der Eingang und der Ausgang jeder der mindestens einen Protokollschicht zur Verbindung mit einem des mindestens einen lokalen Emulationsmanagers der Instanz ist.

9. Vorrichtung nach einem der vorhergehenden Ansprüche,
**dadurch gekennzeichnet,**
**dass** eine erste der mindestens einen Protokollschicht derart konfigurierbar ist, dass sie mit mindestens zwei der mindestens einen Protokollschicht, die höhere Protokollschichten als die erste Protokollschicht sind, und/oder mit mindestens zwei der mindestens einen Protokollschicht, die niedrigere Protokollschichten als die erste Protokollschicht sind, verbindbar ist.

10. Vorrichtung nach Anspruch 9,
**dadurch gekennzeichnet,**
**dass** die Primitiven jeder der mindestens einen Protokollschicht über standardisierte Strukturen und standardisierte Kodierung abbildbar sind.

11. Vorrichtung nach einem der vorhergehenden Ansprüche,
**dadurch gekennzeichnet,**
**dass** sie weiterhin ein Interaktionselement umfasst, über das ein Benutzer mit mindestens einer der mindestens einen Protokollschicht interagieren kann.

12. Vorrichtung nach Anspruch 11,
**dadurch gekennzeichnet,**
**dass** über das Interaktionselement mindestens ein Skript-Interpreter in den Protokoll-Stack einbindbar ist, über den ein Benutzer auf den Protokoll-Stack einwirken kann.

13. Vorrichtung nach einem der vorhergehenden Ansprüche,
**dadurch gekennzeichnet,**
**dass** die Vorrichtung weiterhin eine graphische Benutzeroberfläche (12) umfasst.

14. Vorrichtung nach Anspruch 13,
**dadurch gekennzeichnet,**
**dass** über die graphische Benutzeroberfläche (12) der Protokoll-Stack zusammensetzbar ist.

15. Vorrichtung nach Anspruch 13 oder 14,
**dadurch gekennzeichnet,**
**dass** über die graphische Benutzeroberfläche (12) protokollschicht-spezifische Information bereitstellbar ist.

16. Vorrichtung nach Anspruch 15,
**dadurch gekennzeichnet,**
**dass** protokollschicht-spezifische Informationen in Form von
- einstellbaren und/oder konstanten Parameter der mindestens einen Protokollschicht; und/oder
- Aktionen der mindestens einen Protokollschicht
durch den Benutzer modifizierbar ist.

17. Verfahren zum Aufbau eines Protokoll-Stacks folgende Schritte umfassend:
a) Bereitstellen mindestens einer Protokollschicht mit mindestens einer standardisierten Schnittstelle;
b) Wahlfreies Zusammensetzen eines Protokoll-Stacks, der die mindestens eine Protokollschicht aus a) enthält;
c) Bereitstellen einer Instanz zur Verwaltung des Protokoll-Stacks
d) Bereitstellen einer Beschreibungsdatei zu jeder der mindestens einen Protokollschicht, in der mindestens eine Eigenschaft der mindestens einen Protokollschicht beschrieben ist, **gekennzeichnet durch** den weiteren Schritt :
e) Verbinden der Beschreibungsdateien der Bestandteile des Protokoll-Stacks miteinander.

18. Protokolltester mit einer Vorrichtung nach einem der Ansprüche 1 bis 16.

## Claims

1. Apparatus for building a protocol stack, the apparatus comprising:
a) at least one protocol layer having at least one standardized interface (44, 46);
b) an instance (16, 26) for managing a protocol stack containing the at least one protocol layer of a), wherein a description file is associated with each one of the at least one protocol layer, in which at least one characteristic of the at least one protocol layer is described,
**characterized in that**
the apparatus has means (36; 16, 26), by which the description files of the components of a protocol stack can be linked to each other.

2. Apparatus according to claim 1,
**characterized in that**
it further includes at least one script interpreter, wherein a description file is associated with the at least one script interpreter, in which at least one characteristic of the at least one script interpreter is described.

3. Apparatus according to any one of claims 1 or 2,
**characterized in that**
the instance includes:
- at least one local emulation manager (26) associated with at least one protocol layer, and
- a global emulation manager (16) being in communication with each one of the at least one local emulation manager.

4. Apparatus according to any one of the preceding claims,
**characterized in that**
each one of the at least one protocol layer has at least one service access point, wherein each one of this/these service access point/s has an input and/or an output to another service access point.

5. Apparatus according to claim 4,
**characterized in that**
the at least one characteristic of the at least one protocol layer includes:
- description of the service access point/s, especially by listing primitives, which can be exchanged via the respective service access point/s, and/or
- adjustable and/or constant parameters of the at least one protocol layer, and/or
- actions of the at least one protocol layer.

6. Apparatus according to any one of claims 4 or 5,
**characterized in that**
one of the service access point/s, especially each one of the service access point/s, is simulated using communication functions of the instance (16, 26).

7. Apparatus according to any one of the preceding claims,
**characterized in that**
each one of the at least one protocol layer has an input and an output for communication with the instance (16, 26).

8. Apparatus according to claims 3 an 7 in And combination,
**characterized in that**
the input and the output of each one of the at least one protocol layer are for communication with one of the at least one local emulation manager of the instance.

9. Apparatus according to any one of the preceding claims,
**characterized in that**
a first one of the at least one protocol layer is configurable such that it can be linked to at least two of the at least one protocol layer, which are higher protocol layers than the first protocol layer, and/or to at least two of the at least one protocol layer, which are lower protocol layers than the first protocol layer.

10. Apparatus according to claim 9,
**characterized in that**
the primitives of each one of the at least one protocol layer can be imaged through standardized structures and standardized coding.

11. Apparatus according to any one of the preceding claims,
**characterized in that**
it further includes an interaction element, through which a user can interact with at least one of the at least one protocol layer.

12. Apparatus according to claim 11,
**characterized in that**
through the interaction element, at least one script interpreter can be incorporated into the protocol stack, through which a user can act on the protocol stack.

13. Apparatus according to any one of the preceding claims,
**characterized in that**
the apparatus further includes a graphical user interface (12).

14. Apparatus according to claim 13,
**characterized in that**
the protocol stack can be composed through the graphical user interface (12).

15. Apparatus according to claim 13 or 14,
**characterized in that**
protocol layer-specific information can be provided through the graphical user interface (12).

16. Apparatus according to claim 15,
**characterized in that**
protocol layer-specific information in form of
- adjustable and/or constant parameters of the at least one protocol layer; and/or
- actions of the at least one protocol layer
can be modified by the user.

17. Method for building a protocol stack including the following steps:
a) providing at least one protocol layer having at least one standardized interface;
b) optionally compositing a protocol stack containing the at least one protocol layer of a);
c) providing an instance for managing the protocol stack;
d) providing a description file to each one of the at least one protocol layer, in which at least one characteristic of the at least one protocol layer is described, **characterized by** the further step:
e) linking the description files of the components of the protocol stack to each other.

18. Protocol tester including an apparatus according to any one of claims 1 to 16.

## Revendications

1. Dispositif de configuration d'une pile de protocoles, le dispositif comprenant:
a) au moins une couche de protocole comprenant au moins une interface normalisée (44, 46);
b) une instance (16, 26) de gestion d'une pile de protocoles contenant l'au moins une couche de protocole figurant sous a), chacune des au moins une couche/s étant attribué un fichier de description comprenant la description d'au moins une caractéristique de l'au moins une couche de protocole,
**caractérisé en ce que** le dispositif comporte des moyens (36; 16, 26) permettant la fusion des fichiers de description des composants d'une pile de protocoles.

2. Dispositif selon la revendication 1, **caractérisé en ce qu'**il comporte par ailleurs un interpréteur de script, au moins un fichier de description étant attribué à l'interpréteur de script qui comprend la description d'au moins une caractéristique de l'au moins un interpréteur de script.

3. Dispositif selon l'une des revendications 1 ou 2, **caractérisé en ce que** l'instance comprend:
- au moins un manager d'émulation local (26) étant attribué à au moins une couche de protocole, et
- un manager d'émulation global (16) étant en communication avec chacun des/de l'au moins un manager/s d'émulation.

4. Dispositif selon l'une des revendications précédentes, **caractérisé en ce que** chacune des au moins une couche de protocole comporte au moins un point d'accès au service, le point d'accès au service/chacun des points d'accès au service présentant une entrée et/ou une sortie vers un autre point d'accès au service.

5. Dispositif selon la revendication 4, **caractérisé en ce que** l'au moins une caractéristique de l'au moins une couche de protocole comprend:
- la description du point d'accès de service, notamment à l'aide d'une énumération de primitives susceptibles d'être interchangées via le/les point/s d'accès au service correspondant/s, et/ou
- des paramètres réglabes et/ou constants de l'au moins une couche de protocole et/ou
- des actions de l'au moins une couche de protocole.

6. Procédé selon l'une des revendications 4 ou 5, **caractérisé en ce que** l'un du/des point/s d'accès au service, notamment chacun du point/des points d'accès au service, est reproduit grâce à la mise en oeuvre de fonctions de communication de l'instance (16, 26).

7. Dispositif selon l'une des revendications précédentes, **caractérisé en ce que** chacune de l'au moins une couche de protocole présente une entrée et une sortie destinées à la communication avec l'instance (16,26).

8. Dispositif selon l'une des revendications 3 et 7 en combination "ET", **caractérisé en ce que** l'entrée et la sortie de l'au moins une couche de protocole sont prévues à la communication avec un de l'au moins un manager d'émulation de l'instance.

9. Dispositif selon l'une des revendications précédentes, **caractérisé en ce qu'**une première de l'au moins une couche de protocole est configurable de manière à ce qu'elle puisse être reliée à au moins deux de l'au moins une couche de protocole qui sont des couches de protocole supérieures à la première couche de protocole, et/ou à au moins deux de l'au moins une couche de protocole qui sont des couches de protocole inférieures à la première couche de protocole.

10. Dispositif selon la revendication 9, **caractérisé en ce que** les primitives de chacune de l'au moins une couche de protocole sont visualisables via des structures et des codages normalisés.

11. Dispositif selon l'une des revendications précédentes, **caractérisé en ce qu'**il comprend par ailleurs un élément d'interaction par l'intermédiaire duquel un utilisateur peut interagir avec au moins une de l'au moins une couche de protocole.

12. Dispositif selon la revendication 11, **caractérisé en ce que** par l'intermédiaire de l'élément d'interaction, au moins un interpréteur de script peut être intégré à la pile de protocoles, par l'intermédiaire duquel un utilisateur peut agir sur la pile de protocoles.

13. Dispositif selon l'une des revendications précédentes, **caractérisé en ce que** le dispositif comprend par ailleurs une interface utilisateur graphique (12).

14. Dispositif selon la revendication 13, **caractérisé en ce que** par l'intermédiaire de l'interface utilisateur (12), la pile de protocoles peut être assemblée.

15. Dispositif selon la revendication 13 ou 14, **caractérisé en ce que** par l'intermédiaire de l'interface utilisateur (12), des données spécifiques de couches de protocole peuvent être mises à disposition.

16. Dispositif selon la revendication 15, **caractérisé en ce que** des données spécifiques de couches de protocole existant sous forme
- de paramètres réglables et/ou constants de l'au moins une couche de protocole et/ou
- d'actions de l'au moins une couche de protocole
sont modifiables de la part de l'utilisateur.

17. Procédé de configuration d'une pile de protocoles, comprenant les étapes suivantes:
a) mise à disposition d'au moins une couche de protocole comprenant au moins une interface normalisée;
b) assemblage libre de choix d'une pile de protocoles contenant au moins une couche de protocole figurant sous a);
c) mise à disposition d'une instance de gestion de la pile de protocoles;
d) mise à disposition d'un fichier descriptif relative à chacune de l'au moins une couche de protocole, dans lequel au moins une caractéristique de l'au moins une couche de protocole est décrite, **caractérisée par** l'étape supplémentaire suivante:
e) fusion des fichiers descriptifs des composants de la pile de protocoles.

18. Testeur de protocoles comprenant un dispositif selon l'une des revendications 1 à 16.
